# EUROPEAN PATENT APPLICATION

(11) **EP 4 799 769 A1**
(43) Date of publication of application: **02.09.2026**
(21) Application number: 25762378.5
(22) Date of filing: 26.02.2025
(51) Int. Cl.: B25J 5/00, B62D 61/12, B62D 61/10, B60G 7/00, B60G 15/06

(54) **MOBILE ROBOT**

(30) Priority: 29.02.2024 KR 20240029769
(71) Applicant: Samsung Electronics Co., Ltd., Suwon-si, Gyeonggi-do 16677 (KR)
(72) Inventor: PARK, Jaehyun, Suwon-si Gyeonggi-do 16677 (KR); KIM, Minsong, Suwon-si Gyeonggi-do 16677 (KR); BANG, Heyunmoon, Suwon-si Gyeonggi-do 16677 (KR); SOUK, Hyunchul, Suwon-si Gyeonggi-do 16677 (KR)
(74) Representative: Gulde & Partner
(86) International application number: PCT/KR2025/002708
(87) International publication number: WO 2025/183461

(57) **Abstract**

A mobile robot includes a body, a pair of front drive wheels at a front portion of the body, a pair of rear drive wheels at a rear portion of the body, four auxiliary wheels on a lower surface of the body, and a wheel switching device to switch the front drive wheels and the rear drive wheels into four-wheel mode or two-wheel mode. In four-wheel mode, the front drive wheels and the rear drive wheels contact a moving surface, and the four auxiliary wheels are spaced apart from the moving surface. In two-wheel mode, the front drive wheels are spaced apart from the moving surface and the rear drive wheels move to a center of the body and the body is lowered so that the rear drive wheels and the four auxiliary wheels contact the moving surface.

## Description

### [Technical Field]

The disclosure relates to a mobile robot, and more particularly, to a mobile robot capable of traveling by selectively switching between a two-wheel mode and a four-wheel mode.

### [Background Art]

With the advancement of robot technology, mobile robots are increasingly used in various fields such as manufacturing, logistics, service, and the like.

Mobile robots may include outdoor mobile robots for outdoor traveling and indoor mobile robots for indoor traveling.

Outdoors, the moving space is relatively wide and there are many uneven sections, so outdoor mobile robots often include a large support polygon and four drive wheels. Therefore, the outdoor mobile robots may travel stably outdoors by utilizing the driving force of the four drive wheels.

Indoors, the moving space is narrow and complex, so indoor mobile robots often include a small support polygon and two drive wheels that can rotate in place. Therefore, the indoor mobile robots may travel indoors where the space is narrow and complex.

### [Disclosure of Invention]

### [Technical Solution]

According to an aspect of the disclosure, a mobile robot includes: a body; a pair of front drive wheels at a front portion of the body; a pair of rear drive wheels at a rear portion of the body; four auxiliary wheels on a lower surface of the body; a front wheel switching device including a front linear actuator disposed at an upper portion of the body; and a rear wheel switching device including a rear linear actuator disposed at a lower portion of the body, wherein the front wheel switching device and the rear wheel switching device are configured to switch the pair of front drive wheels and the pair of rear drive wheels between a four-wheel mode and a two-wheel mode, wherein, in the four-wheel mode, the pair of front drive wheels and the pair of rear drive wheels are in contact with a moving surface, and the four auxiliary wheels are spaced apart from the moving surface, and wherein, in the two-wheel mode, the pair of front drive wheels are spaced apart from the moving surface, the pair of rear drive wheels are in a center of the body, and the pair of rear drive wheels and the four auxiliary wheels are in contact with the moving surface.

The front wheel switching device may be configured to move the pair of front drive wheels up and down with respect to the body; and the rear wheel switching device is configured to move the pair of rear drive wheels forward and backward with respect to the body.

The front linear actuator may be configured to move the pair of front drive wheels up and down.

The front wheel switching device further includes: an upper arm including a first end connected to the front linear actuator and a second end connected to the pair of front drive wheels; and a lower arm including a first end connected to the lower portion of the body and a second end connected to the pair of front drive wheels.

The front linear actuator includes: a front motor; a front screw configured to be rotated by the front motor; and a front nut that is screw-coupled to the front screw and to which the first end of the upper arm is connected, and rotation of the front motor causes the first end of the upper arm to move linearly along the front screw.

The upper arm may include a suspension.

The suspension includes a coil spring and a shock absorber.

The rear linear actuator may be configured to move the pair of rear drive wheels forward and backward with respect to the body.

The body may include: an upper support plate; a lower support plate below the upper support plate; and an inclined block on an upper surface of the lower support plate, the inclined block including an inclined surface, and the rear linear actuator is on the inclined surface of the inclined block.

The rear wheel switching device may further include a support bar including a first end connected to the rear linear actuator and a second end connected to the pair of rear drive wheels.

The rear linear actuator may include: a rear motor; a rear screw configured to be rotated by the rear motor; and a rear nut which is screw-coupled to the rear screw and is connected to the support bar, and rotation of the rear motor causes the support bar to move linearly along the rear screw.

The rear wheel switching device may further include: a fixed plate on the rear linear actuator; a movable plate parallel to the fixed plate and spaced apart from the fixed plate by a certain distance, wherein the pair of rear drive wheels are on the moveable plate; an upper link including a first end rotatably attached to the fixed plate and a second end rotatably attached to the movable plate; a lower link below the upper link, the lower link including a first end rotatably attached to the fixed plate and a second end rotatably attached to the movable plate; and a coil spring between the upper link and the lower link.

The rear wheel switching device may include: a fixed plate on the rear linear actuator; a movable plate parallel to the fixed plate and spaced apart from the fixed plate by a certain distance, wherein one of the pair of rear drive wheels is on the moveable plate; and a suspension between the movable plate and the fixed plate.

Each of the pair of front drive wheels and each of the pair of rear drive wheels may include an in-wheel motor.

Each of the four auxiliary wheels may include an omni wheel.

### [Brief Description of Drawings]

The above and other aspects and features of certain embodiments of the disclosure will be more apparent from the following description taken in conjunction with the accompanying drawings, in which:
FIG. 1 is a side view illustrating a mobile robot according to one or more embodiments of the disclosure.
FIG. 2 is a plan view illustrating the mobile robot of FIG. 1 according one or more embodiments of the disclosure.
FIG. 3 is a side view illustrating a state in which the mobile robot of FIG. 1 is switched to a two-wheel mode according to one or more embodiments of the disclosure.
FIG. 4 is a perspective view illustrating a mobile robot according to one or more embodiments of the disclosure.
FIG. 5 is a side view illustrating the mobile robot of FIG. 4 according to one or more embodiments of the disclosure.
FIG. 6 is a front view illustrating the mobile robot of FIG. 4 according to one or more embodiments of the disclosure.
FIG. 7 is a rear view illustrating the mobile robot of FIG. 4 according to one or more embodiments of the disclosure.
FIG. 8 is a plan view illustrating the mobile robot of FIG. 4 according to one or more embodiments of the disclosure without an upper support plate.
FIG. 9 is a perspective view illustrating a front linear actuator of a mobile robot according to one or more embodiments of the disclosure.
FIG. 10 is a perspective view illustrating a rear linear actuator of a mobile robot according to one or more embodiments of the disclosure.
FIG. 11A is a partial view illustrating a left support bar of a rear wheel switching device of a mobile robot according to one or more embodiments of the disclosure.
FIG. 11B is a partial view illustrating a left support bar of a rear wheel switching device of a mobile robot according to one or more embodiments of the disclosure when a rear drive wheel is raised.
FIG. 11C is a partial view illustrating a left support bar of a rear wheel switching device of a mobile robot according to one or more embodiments of the disclosure when a rear drive wheel is lowered.
FIG. 12 is a partial view illustrating a left support bar of a rear wheel switching device of a mobile robot according to one or more embodiments of the disclosure.
FIG. 13 is a perspective view illustrating an auxiliary wheel of a mobile robot according to one or more embodiments of the disclosure.
FIG. 14 is a side view illustrating the auxiliary wheel of FIG. 13 according to one or more embodiments of the disclosure.
FIG. 15 is a perspective view illustrating a mobile robot according to one or more embodiments of the disclosure, which has been switched to a two-wheel mode.
FIG. 16 is a side view illustrating the mobile robot of FIG. 15 according to one or more embodiments of the disclosure.
FIG. 17 is a front view illustrating the mobile robot of FIG. 15 according to one or more embodiments of the disclosure.
FIG. 18 is a block diagram illustrating a mobile robot according to one or more embodiments of the disclosure.

### [Best Mode for Carrying out the Invention]

The various embodiments described herein and terms used herein are not intended to limit the technical features described in this disclosure to specific embodiments, but should be understood to include various modifications, equivalents, or alternatives of the embodiments.

In connection with the description of the drawings, similar reference numbers may be used for similar or related components.

The singular form of a noun corresponding to an item may include one or more of the above item, unless the relevant context clearly indicates otherwise.

As used herein, each of phrases such as "A or B," "at least one of A and B," "at least one of A or B," "A, B, or C," "at least one of A, B, and C," "at least one of A, B, C" may include any one of the items listed together with the corresponding phrase, or any possible combination thereof.

The term "and/or" includes any element of a plurality of related described elements or a combination of a plurality of related described elements.

Terms such as "first," "second," "primary," or "secondary" may be used simply to distinguish one component from other components, and do not limit the corresponding components in other respects (e.g., importance or order).

When it is mentioned that one (e.g., first) component is "coupled" or "connected" to another (e.g., second) component with or without terms "functionally" or "communicatively", it means that the one component can be connected to the another component directly (e.g., wired), wirelessly, or through a third component.

Terms such as "include" or "have" are intended to designate the presence of features, numbers, steps, operations, components, parts, or combinations thereof described in the embodiment, but do not preclude the presence or addition of one or more other features, numbers, steps, operations, components, parts, or combination thereof.

When a component is said to be "connected," "coupled," "supported," or "in contact" with another component, this means not only cases where the components are directly connected, coupled, supported, or contacted, but also cases where the components are indirectly connected, coupled, supported, or contacted through a third component.

When a component is said to be located "on" other component, this includes not only cases where the component is in contact with the other component, but also cases where another component exits between the two components.

Further, the terms 'leading end', 'rear end', 'upper side', 'lower side', 'top end', 'bottom end', etc. used in the disclosure are defined with reference to the drawings. However, the shape and position of each component are not limited by the terms.

The disclosure relates to a mobile robot having high traveling performance both indoors and outdoors.

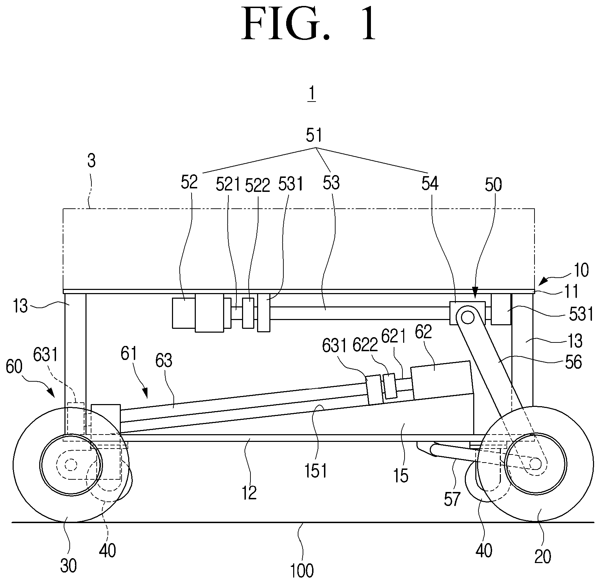

Hereinafter, a mobile robot 1 according to one or more embodiments of the disclosure will be described in detail with reference to FIGS. 1, 2, and 3.

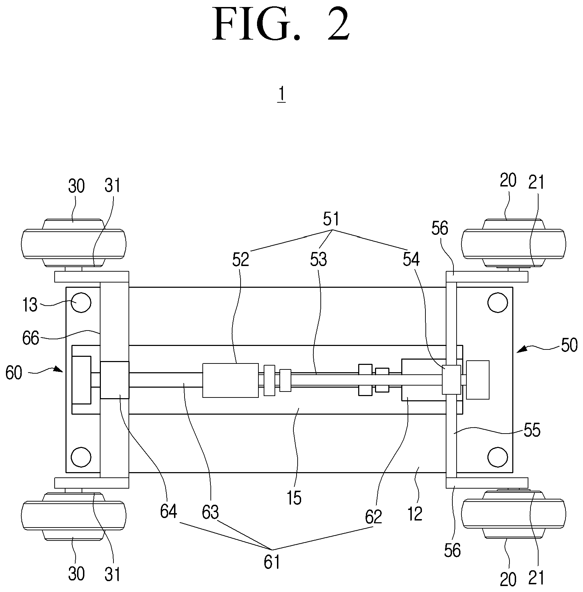

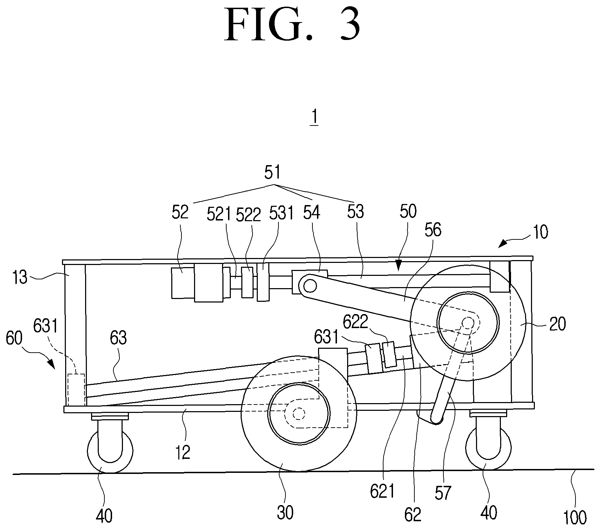

FIG. 1 is a side view illustrating a mobile robot 1 according to one or more embodiments of the disclosure. FIG. 2 is a plan view illustrating the mobile robot 1 of FIG. 1 according one or more embodiments of the disclosure. FIG. 3 is a side view illustrating a state in which the mobile robot 1 of FIG. 1 is switched to a two-wheel mode according to one or more embodiments of the disclosure. For reference, in FIG. 2, an upper support plate 11 of the mobile robot 1 is removed.

Referring to FIGS. 1, 2, and 3, a mobile robot 1 according to one or more embodiments of the disclosure may include a body 10, a pair of front drive wheels 20, a pair of rear drive wheels 30, four auxiliary wheels 40, and a wheel switching device 50 and 60.

The body 10 may be configured to support and fix the pair of front drive wheels 20, the pair of rear drive wheels 30, the four auxiliary wheels 40, and the wheel switching device 50 and 60.

A module 3 corresponding to the purpose of the mobile robot 1 may be disposed on the upper surface of the body 10. For example, when the mobile robot 1 is used for delivery, a delivery module may be disposed on the upper surface of the body 10. When the mobile robot 1 is used for guidance, a guidance module may be disposed on the upper surface of the body 10.

The body 10 may include an upper support plate 11 and a lower support plate 12.

The upper support plate 11 and the lower support plate 12 may be spaced apart from each other by a certain distance in the vertical direction. A plurality of support columns 13 may be disposed between the upper support plate 11 and the lower support plate 12. For example, the upper support plate 11 and the lower support plate 12 may be connected by the plurality of support columns 13.

The upper support plate 11 may be formed as a flat plate having an approximately rectangular shape. The lower support plate 12 may be formed in a shape corresponding to the upper support plate 11. The lower support plate 12 may be formed as a flat plate having an approximately rectangular shape.

The pair of front drive wheels 20 may be disposed at the front portion of the body 10. Each of the pair of front drive wheels 20 may include a front in-wheel motor 21. The front in-wheel motor 21 may be disposed at the center of the front drive wheel 20. The front drive wheel 20 may be rotated by the front in-wheel motor 21.

The pair of front drive wheels 20 may be disposed on the body 10 to selectively contact a moving surface 100. When the mobile robot 1 is in a two-wheel mode, the pair of front drive wheels 20 do not contact the moving surface 100. When the mobile robot 1 is in a four-wheel mode, the pair of front drive wheels 20 contact the moving surface 100. Here, the moving surface 100 refers to a surface such as a road, a sidewalk, a floor of a building, a hallway, a floor of an elevator, and the like on which the mobile robot 1 may move.

When the pair of front drive wheels 20 contact the moving surface 100, the pair of front drive wheels 20 may protrude below the lower surface of the body 10.

When the pair of front drive wheels 20 contact the moving surface 100, the pair of front drive wheels 20 may protrude lower than the four auxiliary wheels 40 disposed on the lower surface of the body 10. Therefore, when the pair of front drive wheels 20 contact the moving surface 100, the four auxiliary wheels 40 do not contact the moving surface 100.

The pair of rear drive wheels 30 may be disposed on the rear portion of the body 10. Each of the pair of rear drive wheels 30 may include a rear in-wheel motor 31. The rear in-wheel motor 31 may be disposed at the center of the rear drive wheel 30. The rear drive wheel 30 may be rotated by the rear in-wheel motor 31.

The pair of rear drive wheels 30 may be disposed on the body 10 so as to contact the moving surface 100. When the mobile robot 1 is in the two-wheel mode and the four-wheel mode, the pair of rear drive wheels 30 contact the moving surface 100.

The pair of rear drive wheels 30 may be disposed so as to protrude lower than the lower surface of the body 10.

In the case of the four-wheel mode in which the pair of front drive wheels 20 contact the moving surface 100, the pair of rear drive wheels 30 may protrude lower than the four auxiliary wheels 40 disposed on the lower surface of the body 10. Therefore, when the pair of front drive wheels 20 contact the moving surface 100, the four auxiliary wheels 40 do not contact the moving surface 100.

In the case of the two-wheel mode in which the pair of front drive wheels 20 do not contact the moving surface 100, the pair of rear drive wheels 30 may protrude to the same height as the four auxiliary wheels 40 disposed on the lower surface of the body 10. Accordingly, when the pair of front drive wheels 20 do not contact the moving surface 100, the four auxiliary wheels 40 may contact the moving surface 100 together with the pair of rear drive wheels 30.

The four auxiliary wheels 40 may be disposed on the lower surface of the body 10. A wheel that can rotate in all directions may be used as the four auxiliary wheels 40. For example, casters, omni wheels, mecanum wheels, etc. may be used as the auxiliary wheels 40.

The wheel switching device 50 and 60 may be configured so that the mobile robot 1 may be switched into one of the four-wheel mode and the two-wheel mode. The wheel switching device 50 and 60 may be configured so that the positions of the pair of front drive wheels 20 and the pair of rear drive wheels 30 are switched into one of the four-wheel mode and the two-wheel mode.

The four-wheel mode is a state in which the pair of front drive wheels 20 and the pair of rear drive wheels 30 are in contact with the moving surface 100. In the four-wheel mode, the four auxiliary wheels 40 are spaced apart from the moving surface 100.

The two-wheel mode is a state in which the pair of front drive wheels 20 are spaced apart from the moving surface 100 and the pair of rear drive wheels 30 are in contact with the moving surface 100. In the two-wheel mode, the four auxiliary wheels 40 are in contact with the moving surface 100.

The wheel switching device may include a front wheel switching device 50 and a rear wheel switching device 60.

The front wheel switching device 50 may be configured to move the pair of front drive wheels 20. The front wheel switching device 50 may be configured to move the pair of front drive wheels 20 up and down with respect to the body 10. In the four-wheel mode, the front wheel switching device 50 may lower the pair of front drive wheels 20 so that the pair of front drive wheels 20 come into contact with the moving surface 100. In the two-wheel mode, the front wheel switching device 50 may raise the pair of front drive wheels 20 so that the pair of front drive wheels 20 are spaced apart from the moving surface 100.

The front wheel switching device 50 may include a front linear actuator 51. The front linear actuator 51 may be configured to raise and lower the pair of front drive wheels 20. The pair of front drive wheels 20 may be raised above the lower surface of the body 10 or may be lowered below the lower surface of the body 10 by the front linear actuator 51.

The front linear actuator 51 may be disposed on the upper portion of the body 10. For example, the front linear actuator 51 may be disposed on the lower surface of the upper support plate 11 of the body 10.

The front linear actuator 51 may include a front motor 52, a front screw 53, and a front nut 54.

The front motor 52 may be configured to rotate the front screw 53. The front motor 52 may be configured to rotate the front screw 53 in both directions. The front motor 52 may include a motor shaft 521.

The front screw 53 may be disposed to rotate by the front motor 52. The front screw 53 may be supported at both ends on the lower surface of the upper support plate 11 of the body 10. The front screw 53 may be supported by a pair of support blocks 531 disposed on the lower surface of the upper support plate 11.

A first end of the front screw 53 may be coupled to the motor shaft 521 of the front motor 52 by a coupling 522. Therefore, when the motor shaft 521 rotates, the front screw 53 may rotate integrally with the motor shaft 521.

The front nut 54 may be screw-coupled to the front screw 53. Therefore, when the front screw 53 rotates, the front nut 54 may move linearly along the front screw 53. For example, the front screw 53 and the front nut 54 may convert the rotation of the front motor 52 into the linear movement of the front nut 54. The front screw 53 and the front nut 54 may include a lead screw and a nut or a ball screw and a ball nut.

The front wheel switching device 50 may include an upper arm 56 and a lower arm 57.

The upper arm 56 may connect the front linear actuator 51 and the front drive wheels 20. A first end of the upper arm 56 may be connected to the front linear actuator 51, and a second end thereof may be connected to the front drive wheel 20. The first end of the upper arm 56 may be rotatably connected to the front nut 54 of the front linear actuator 51, and the second end of the upper arm 56 may be rotatably connected to the front drive wheels 20.

The lower arm 57 may connect the body 10 and the front drive wheels 20. A first end of the lower arm 57 may be connected to the lower portion of the body 10, that is, the lower support plate 12 of the body 10, and a second end thereof may be connected to the front drive wheel 20. The first end of the lower arm 57 may be rotatably connected to the lower portion of the body 10, and the second end of the lower arm 57 may be rotatably connected to the front drive wheel 20.

When the front drive wheels 20 include the front in-wheel motors 21, the second end of the upper arm 56 and the second end of the lower arm 57 may be rotatably connected to a support bracket that supports the front in-wheel motors 21.

The front wheel switching device 50 may include a pair of upper arms 56 and a pair of lower arms 57 corresponding to the pair of front drive wheels 20. For example, the front wheel switching device 50 may include a left upper arm 56 and a left lower arm 57 that are connected to the left front drive wheel 20, and a right upper arm 56 and a right lower arm 57 that are connected to the right front drive wheel 20.

The pair of upper arms 56 and the pair of lower arms 57 may be configured so that the pair of front drive wheels 20 protrude to the maximum extent toward the front of the body 10. When the pair of front drive wheels 20 are configured so that they protrude to the maximum extent toward the front of the body 10, the area of the support polygon of the mobile robot 1 may be increased.

Therefore, when the front motor 52 rotates, the first end of the upper arm 56 may move linearly along the front screw 53. For example, when the front motor 52 rotates, the front screw 53 may rotate. When the front screw 53 rotates, the front nut 54 screw-coupled to the front screw 53 may move linearly along the front screw 53. Because the first end of the upper arm 56 is rotatably connected to the front nut 54, when the front screw 53 rotates, the first end of the upper arm 56 may move linearly along the front screw 53.

When the upper arm 56 moves linearly along the front screw 53, the front drive wheels 20 may be rotated at a certain angle relative to the body 10 by the upper arm 56 and the lower arm 57. When the front motor 52 rotates in one direction, the front drive wheels 20 may swing upward, that is, counter-clockwise, relative to the body 10, and rise. When the front motor 52 rotates in the opposite direction, the front drive wheels 20 may swing downward, that is, clockwise, relative to the body 10, and descend.

The rear wheel switching device 60 may be configured to move the pair of rear drive wheels 30. The rear wheel switching device 60 may be configured to move the pair of rear drive wheels 30 back and forth relative to the body 10.

In the four-wheel mode, the rear wheel switching device 60 may move the pair of rear drive wheels 30 toward the rear of the body 10 so that the pair of rear drive wheels 30 protrude from the rear end of the body 10. The pair of rear drive wheels 30 may be disposed to protrude to the maximum extent toward the rear of the body 10. When the pair of rear drive wheels 30 are configured so that they protrude to the maximum extent from the rear end of the body 10, the area of the support polygon of the mobile robot 1 may be increased.

In the two-wheel mode, the rear wheel switching device 60 may move the pair of rear drive wheels 30 to the center of the body 10 so that the pair of rear drive wheels 30 are positioned at the center of the body 10, and the body 10 is lowered. Then, the four auxiliary wheels 40 disposed on the lower surface of the body 10 come contact with the moving surface 100. At this time, the pair of rear drive wheels 30 may be positioned at the middle of the four auxiliary wheels 40. For example, as illustrated in FIG. 3, two auxiliary wheels 40 may be positioned on the left side of the pair of rear drive wheels 30, and the other two auxiliary wheels 40 may be positioned on the right side of the pair of rear drive wheels 30.

The rear wheel switching device 60 may include a rear linear actuator 61. The rear linear actuator 61 may be configured to move the pair of rear drive wheels 30 back and forth with respect to the body 10. The pair of rear drive wheels 30 may be positioned at the rear of the body 10 or at the center of the body 10 by the rear linear actuator 61.

The rear linear actuator 61 may be disposed at the lower portion of the body 10. For example, the rear linear actuator 61 may be disposed on the upper surface of the lower support plate 12 of the body 10.

The body 10 may include an inclined block 15 disposed on the upper surface of the lower support plate 12. The rear linear actuator 61 may be disposed on an inclined surface 151 of the inclined block 15.

The inclined block 15 may be formed to have the inclined surface 151 that is inclined upwardly with respect to the lower support plate 12. The inclined block 15 may be disposed so that the high point of the inclined surface 151 is adjacent to the front end of the body 10 and the low point of the inclined surface 151 is adjacent to the rear end of the body 10. The angle of the inclined surface 151 may be defined so that when the pair of rear drive wheels 30 are positioned at the center of the body 10, the four auxiliary wheels 40 disposed on the lower surface of the body 10 come into contact with the moving surface 100.

The rear linear actuator 61 may include a rear motor 62, a rear screw 63, and a rear nut 64.

The rear motor 62 may be configured to rotate the rear screw 63. The rear motor 62 may be configured to rotate the rear screw 63 in both directions. The rear motor 62 may include a motor shaft 621.

The rear screw 63 may be disposed to be rotated by the rear motor 62. The rear screw 63 may be disposed so that both ends of the rear screw 63 are supported on the inclined surface 151 of the inclined block 15 on the lower support plate 12. The rear screw 63 may be supported by a pair of support blocks 631 disposed on the inclined surface 151 of the inclined block 15.

A first end of the rear screw 63 may be coupled to the motor shaft 621 of the rear motor 62 by a coupling 622. Therefore, when the motor shaft 621 rotates, the rear screw 63 may rotate integrally with the motor shaft 621.

The rear nut 64 may be screw-coupled to the rear screw 63. Therefore, when the rear screw 63 rotates, the rear nut 64 may move linearly along the rear screw 63. For example, the rear screw 63 and the rear nut 64 may be configured to convert the rotational motion of the rear motor 62 into the linear motion of the rear nut 64. The rear screw 63 and the rear nut 64 may include a lead screw and a nut or a ball screw and a ball nut.

The rear wheel switching device 60 may include a support bar 66 configured to connect the pair of rear drive wheels 30 and the rear linear actuator 61. A first end of the support bar 66 may be connected to the rear linear actuator 61, and a second end thereof may be connected to the pair of rear drive wheels 30.

The support bar 66 may be connected to the rear nut 64 of the rear linear actuator 61. For example, the rear nut 64 may be disposed at the center of the support bar 66. Therefore, when the rear nut 64 moves linearly by the rear screw 63, the support bar 66 may move linearly along the rear screw 63 together with the rear nut 64.

The pair of rear drive wheels 30 may be disposed at both ends of the support bar 66. When the pair of rear drive wheels 30 include the rear in-wheel motors 31, both ends of the support bar 66 may be connected to support brackets configured to support the rear in-wheel motors 31, respectively.

Therefore, when the rear motor 62 rotates, the support bar 66 may move linearly along the rear screw 63. For example, when the rear motor 62 rotates, the rear screw 63 may rotate. When the rear screw 63 rotates, the rear nut 64 screw-coupled to the rear screw 63 may move linearly along the rear screw 63. Because the support bar 66 is connected to the rear nut 64, when the rear screw 63 rotates, the support bar 66 may move linearly along the rear screw 63.

When the support bar 66 moves linearly along the rear screw 63 disposed on the inclined block 15, the body 10 may be raised or lowered with respect to the moving surface 100 by the inclined block 15. When the rear motor 62 rotates in one direction, the rear drive wheels 30 may move to the center of the body 10 and the body 10 may be lowered. When the rear motor 62 rotates in the opposite direction, the rear drive wheels 30 may move rearward and the body 10 may be raised.

In the four-wheel mode illustrated in FIGS. 1 and 2, the pair of front drive wheels 20 and the pair of rear drive wheels 30 come into contact with the moving surface 100. In this case, the pair of front drive wheels 20 may protrude to the maximum from the front end of the body 10, and the pair of rear drive wheels 30 may protrude to the maximum from the rear end of the body 10. Accordingly, the area of the support polygon of the mobile robot 1 may be increased so that the mobile robot 1 may stably move on an uneven moving surface 100, such as outdoors.

In the two-wheel mode illustrated in FIG. 3, the pair of front drive wheels 20 are spaced apart from the moving surface 100, and the pair of rear drive wheels 30 and the four auxiliary wheels 40 come into contact with the moving surface 100. In this case, the pair of front drive wheels 20 are raised and positioned inside the body 10, and the pair of rear drive wheels 30 are positioned at the center of the body 10. Therefore, the area of the support polygon of the mobile robot 1 may be minimized, so that the mobile robot 1 may move efficiently in a narrow space such as indoors. In the two-wheel mode, the mobile robot 1 may rotate in place by the pair of rear drive wheels 30.

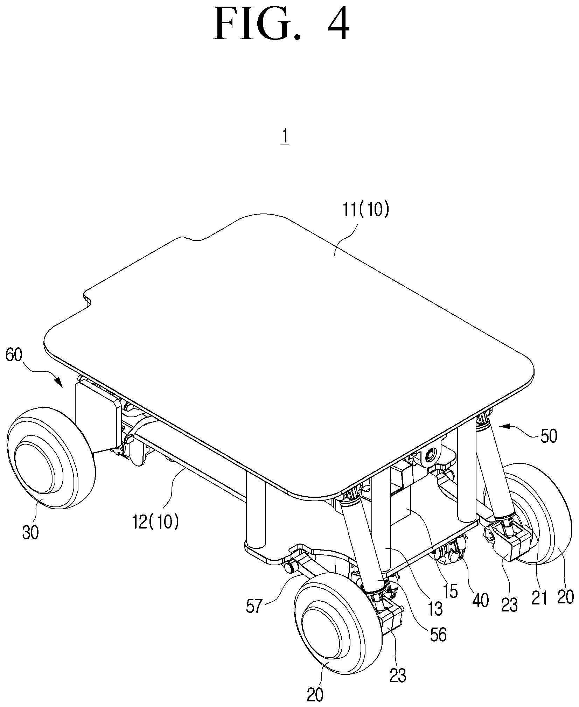

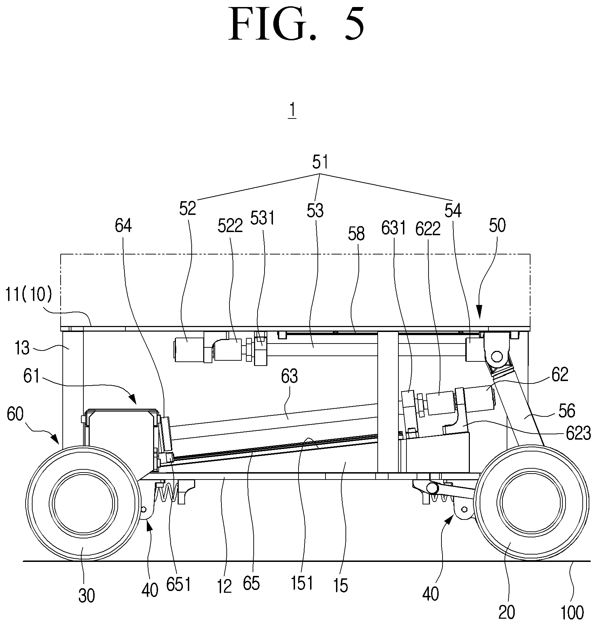

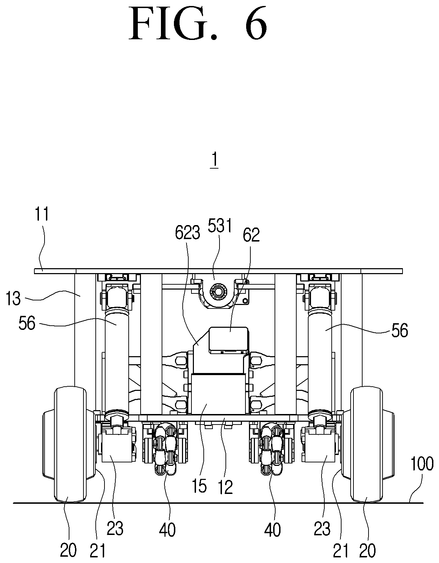

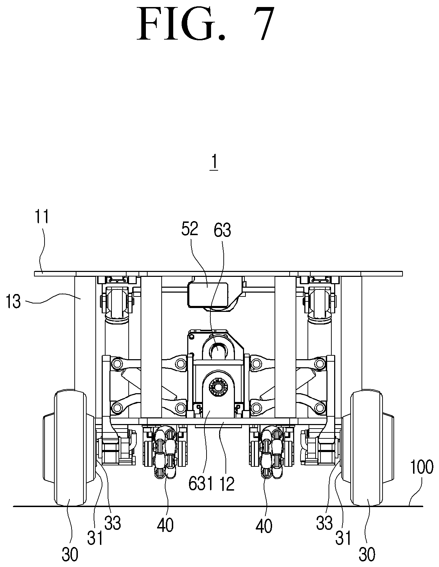

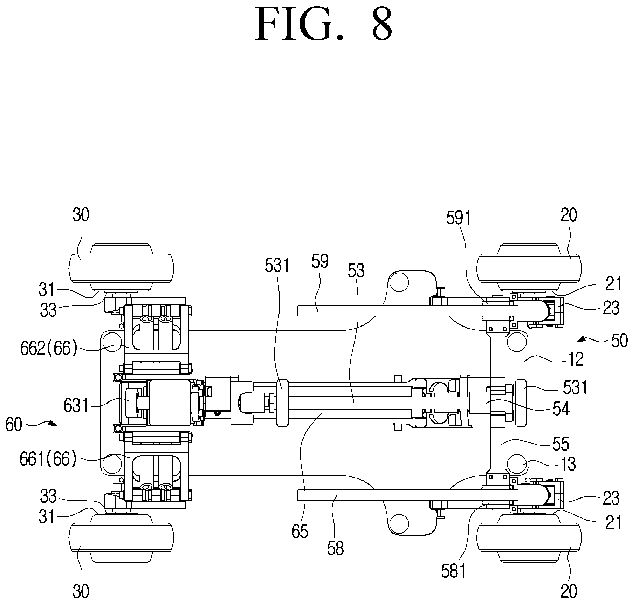

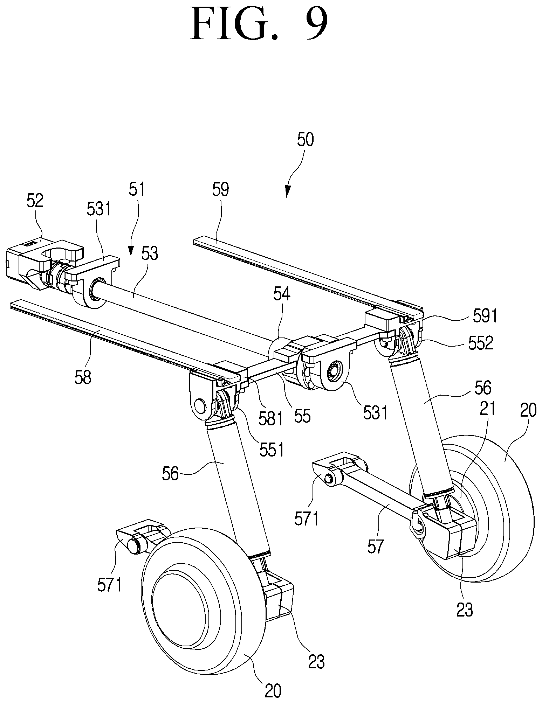

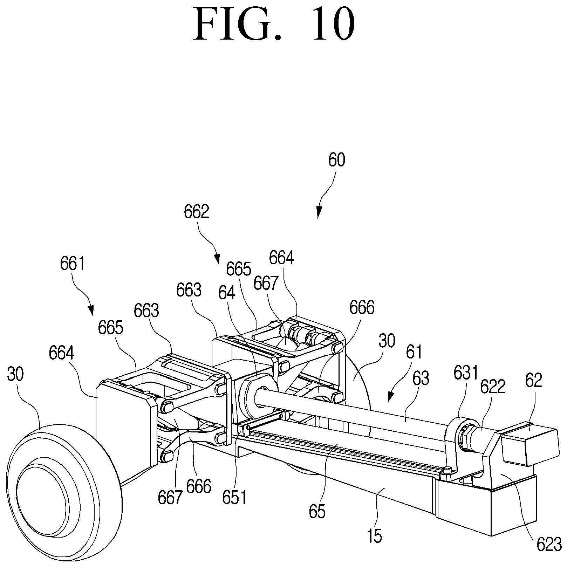

FIG. 4 is a perspective view illustrating a mobile robot 1 according to one or more embodiments of the disclosure. FIG. 5 is a side view illustrating the mobile robot 1 of FIG. 4 according to one or more embodiments of the disclosure. FIG. 6 is a front view illustrating the mobile robot 1 of FIG. 4 according to one or more embodiments of the disclosure. FIG. 7 is a rear view illustrating the mobile robot 1 of FIG. 4 according to one or more embodiments of the disclosure. FIG. 8 is a plan view illustrating the mobile robot 1 of FIG. 4 according to one or more embodiments of the disclosure without an upper support plate 11. FIG. 9 is a perspective view illustrating a front linear actuator 51 of a mobile robot 1 according to one or more embodiments of the disclosure. FIG. 10 is a perspective view illustrating a rear linear actuator 61 of a mobile robot 1 according to one or more embodiments of the disclosure.

Referring to FIGS. 4 to 8, a mobile robot 1 may include a body 10, a pair of front drive wheels 20, a pair of rear drive wheels 30, four auxiliary wheels 40, and wheel switching devices 50 and 60.

The body 10 may be configured to support and fix the pair of front drive wheels 20, the pair of rear drive wheels 30, the four auxiliary wheels 40, and the wheel switching devices 50 and 60.

A module 3 corresponding to the purpose of the mobile robot 1 may be disposed on the upper surface of the body 10 (see FIG. 1). For example, a delivery module, a guidance module, etc. may be disposed on the upper surface of the body 10.

The body 10 may include an upper support plate 11 and a lower support plate 12.

The upper support plate 11 and the lower support plate 12 may be spaced apart from each other by a certain distance in the vertical direction. A plurality of support columns 13 may be disposed between the upper support plate 11 and the lower support plate 12. The upper support plate 11 and the lower support plate 12 may be connected by the plurality of support columns 13. For example, six support columns 13 may be disposed between the upper support plate 11 and the lower support plate 12.

The upper support plate 11 may be formed as a flat plate having an approximately rectangular shape. The lower support plate 12 may be formed in a shape corresponding to the upper support plate 11. The lower support plate 12 may be formed as a flat plate having an approximately rectangular shape. The lower support plate 12 may be formed smaller than the upper support plate 11.

The pair of front drive wheels 20 may be disposed at the front portion of the body 10. The pair of front drive wheels 20 may be disposed so as to protrude forward from the front surface of the body 10. Each of the pair of front drive wheels 20 may include a front in-wheel motor 21. The front in-wheel motor 21 may be disposed at the center of the front drive wheel 20. The front drive wheel 20 may be rotated by the front in-wheel motor 21.

The pair of front drive wheels 20 may be disposed in the body 10 to selectively contact a moving surface 100. When the mobile robot 1 is in the two-wheel mode, the pair of front drive wheels 20 may not contact the moving surface 100. When the mobile robot 1 is in the four-wheel mode, the pair of front drive wheels 20 may contact the moving surface 100. Here, the moving surface 100 refers to a surface such as a road, a sidewalk, a floor of a building, a hallway, a floor of an elevator, and the like on which the mobile robot 1 may move.

When the pair of front drive wheels 20 come into contact with the moving surface 100, the pair of front drive wheels 20 may protrude downward from the lower surface of the body 10 and forward from the front surface of the body 10.

When the pair of front drive wheels 20 come into contact with the moving surface 100, the pair of front drive wheels 20 may protrude lower than the four auxiliary wheels 40 disposed on the lower surface of the body 10. Therefore, when the pair of front drive wheels 20 come into contact with the moving surface 100, the four auxiliary wheels 40 may not contact the moving surface 100.

When the mobile robot 1 is in the two-wheel mode, the pair of front drive wheels 20 may be positioned inside the body 10 and may not protrude forward of the body 10.

The pair of rear drive wheels 30 may be disposed at the rear portion of the body 10. Each of the pair of rear drive wheels 30 may include a rear in-wheel motor 31. The rear in-wheel motor 31 may be disposed at the center of the rear drive wheel 30. The rear drive wheel 30 may be rotated by the rear in-wheel motor 31.

The pair of rear drive wheels 30 may be disposed in the body 10 so as to contact the moving surface 100. When the mobile robot 1 travels, regardless of the two-wheel mode or the four-wheel mode, the pair of rear drive wheels 30 may always contact the moving surface 100.

The pair of rear drive wheels 30 may be disposed so as to protrude downward from the lower surface of the body 10 and backward from the rear surface of the body 10.

In the case of the four-wheel mode in which the pair of front drive wheels 20 contact the moving surface 100, the pair of rear drive wheels 30 may protrude lower than the four auxiliary wheels 40 disposed on the lower surface of the body 10. Therefore, when the pair of front drive wheels 20 contact the moving surface 100, the four auxiliary wheels 40 may not contact the moving surface 100.

In the case of the two-wheel mode in which the pair of front drive wheels 20 do not contact the moving surface 100, the pair of rear drive wheels 30 may protrude to the same height as the four auxiliary wheels 40 disposed on the lower surface of the body 10. Accordingly, when the pair of front drive wheels 20 do not contact the moving surface 100, the four auxiliary wheels 40 may contact the moving surface 100 together with the pair of rear drive wheels 30.

The wheel switching devices 50 and 60 may be configured so that the mobile robot 1 may be switched into one of the four-wheel mode and the two-wheel mode. The wheel switching devices 50 and 60 may be configured so that the positions of the pair of front drive wheels 20 and the pair of rear drive wheels 30 are switched into one of the four-wheel mode and the two-wheel mode.

The four-wheel mode is a state in which the pair of front drive wheels 20 and the pair of rear drive wheels 30 are in contact with the moving surface 100. The pair of front drive wheels 20 may protrude forward from the front surface of the body 10, and the pair of rear drive wheels 30 may protrude backward from the rear surface of the body 10. In the four-wheel mode, the four auxiliary wheels 40 may be spaced apart from the moving surface 100.

The two-wheel mode is a state in which the pair of front drive wheels 20 are spaced apart from the moving surface 100 and the pair of rear drive wheels 30 are in contact with the moving surface 100. The pair of front drive wheels 20 may be located inside the body 10 and may not protrude from the front surface of the body 10. The pair of rear drive wheels 30 may be located in the center of the body 10. In the two-wheel mode, the four auxiliary wheels 40 may be in contact with the moving surface 100. In the two-wheel mode, when the pair of rear drive wheels 30 move to the center of the body 10, the body 10 may be lowered so that the four auxiliary wheels 40 come into contact with the moving surface 100.

The wheel switching devices may include a front wheel switching device 50 and a rear wheel switching device 60.

The front wheel switching device 50 may be configured to move the pair of front drive wheels 20. The front wheel switching device 50 may be configured to move the pair of front drive wheels 20 up and down with respect to the body 10.

In the four-wheel mode, the front wheel switching device 50 may lower the pair of front drive wheels 20 so that the pair of front drive wheels 20 come into contact with the moving surface 100. The front wheel switching device 50 may lower the pair of front drive wheels 20 so that the pair of front drive wheels 20 protrude from the front surface and the lower surface of the body 10.

In the two-wheel mode, the front wheel switching device 50 may raise the pair of front drive wheels 20 so that the pair of front drive wheels 20 are spaced apart from the moving surface 100. The front wheel switching device 50 may raise the pair of front drive wheels 20 so that the pair of front drive wheels 20 are positioned inside the body 10, that is, in the space between the upper support plate 11 and the lower support plate 12. In this configuration, the pair of front drive wheels 20 may not protrude from the front surface of the body 10, that is, from the front ends of the upper support plate 11 and the lower support plate 12.

The front wheel switching device 50 may include a front linear actuator 51. The front linear actuator 51 may be configured to raise and lower the pair of front drive wheels 20. The pair of front drive wheels 20 may be positioned above or protrude below the lower surface of the body 10 by the front linear actuator 51.

The front linear actuator 51 may be disposed on the upper portion of the body 10. For example, the front linear actuator 51 may be disposed on the lower surface of the upper support plate 11 of the body 10.

Referring to FIGS. 5, 8, and 9, the front linear actuator 51 may include a front motor 52, a front screw 53, and a front nut 54.

The front motor 52 may be disposed on the lower surface of the upper support plate 11. The front motor 52 may be configured to rotate the front screw 53. The front motor 52 may be configured to rotate the front screw 53 in both directions. The front motor 52 may include a motor shaft 521.

The front screw 53 may be disposed to be rotated by the front motor 52. The front screw 53 may be supported at both ends on the lower surface of the upper support plate 11 of the body 10. The front screw 53 may be supported by a pair of support blocks 531 disposed on the lower surface of the upper support plate 11.

A first end of the front screw 53 may be coupled with the motor shaft 521 of the front motor 52 by a coupling 522. Therefore, when the motor shaft 521 rotates, the front screw 53 may rotate integrally with the motor shaft 521.

The front nut 54 may be screw-coupled to the front screw 53. Therefore, when the front screw 53 rotates, the front nut 54 may move linearly along the front screw 53. For example, the front screw 53 and the front nut 54 may convert the rotation of the front motor 52 into linear movement of the front nut 54. The front screw 53 and the front nut 54 may be configured as a lead screw and a nut or a ball screw and a ball nut.

The front wheel switching device 50 may include an upper arm 56 and a lower arm 57.

The upper arm 56 may connect the front linear actuator 51 and the front drive wheel 20. The first end of the upper arm 56 may be connected to the front linear actuator 51, and the second end thereof may be connected to the front drive wheel 20. The first end of the upper arm 56 may be rotatably connected to the front nut 54 of the front linear actuator 51, and the second end of the upper arm 56 may be rotatably connected to the front drive wheel 20.

The upper arm 56 may be configured as a suspension. The suspension may be configured to absorb shock applied to the front drive wheel 20. The suspension may include a coil spring and a shock absorber. The coil spring and the shock absorber may be arranged in a straight line.

The lower arm 57 may connect the body 10 and the front drive wheel 20. A first end of the lower arm 57 may be connected to the lower portion of the body 10, that is, to the lower support plate 12 of the body 10, and the second end thereof may be connected to the front drive wheel 20. The first end of the lower arm 57 may be rotatably connected to the lower portion of the body 10, and the second end of the lower arm 57 may be rotatably connected to the front drive wheel 20.

When the front drive wheels 20 include the front in-wheel motor 21, the second end of the upper arm 56 and the second end of the lower arm 57 may be rotatably connected to a support bracket 23 that supports the front in-wheel motor 21.

The front wheel switching device 50 may include a pair of upper arms 56 and a pair of lower arms 57 corresponding to the pair of front drive wheels 20. For example, the front wheel switching device 50 may include a left upper arm 56 and a left lower arm 57 that are connected to the left front drive wheel 20, and a right upper arm 56 and a right lower arm 57 that are connected to the right front drive wheel 20.

The front wheel switching device 50 may include a middle bar 55 connecting the pair of upper arms 56 and the front nut 54. The front nut 54 may be connected to the center of the middle bar 55, the first end of the left upper arm 56 may be connected to the left end of the middle bar 55, and the first end of the right upper arm 56 may be connected to the right end of the middle bar 55.

A left hinge 551 that rotatably supports the first end of the left upper arm 56 may be provided at the left end of the middle bar 55. The left hinge 551 may be guided by a left LM guide 58. The left LM guide 58 may be disposed on the lower surface of the upper support plate 11.

A right hinge 552 that rotatably supports the first end of the right upper arm 56 may be provided at the right end of the middle bar 55. The right hinge 552 may be guided by a right LM guide 59. The right LM guide 59 may be disposed on the lower surface of the upper support plate 11. The right LM guide 59 may be disposed parallel to the left LM guide 58.

The second end of the left upper arm 56 may be rotatably disposed on a left support bracket 23 disposed at the front in-wheel motor 21 of the left front drive wheel 20.

The second end of the right upper arm 56 may be rotatably disposed on a right support bracket 23 disposed at the front in-wheel motor 21 of the right front drive wheel 20.

The first end of the left lower arm 57 may be rotatably supported by a left lower hinge 571 disposed on the lower support plate 12.

The second end of the left lower arm 57 may be rotatably disposed on the left support bracket 23 disposed at the front in-wheel motor 21 of the left front drive wheel 20.

The first end of the right lower arm 57 may be rotatably supported by a right lower hinge 571 disposed on the lower support plate 12.

The second end of the right lower arm 57 may be rotatably disposed on the right support bracket 23 disposed at the front in-wheel motor 21 of the right front drive wheel 20.

The front wheel switching device 50 may be configured as a MacPherson strut suspension.

The pair of upper arms 56 and the pair of lower arms 57 may be configured so that the pair of front drive wheels 20 protrude to the maximum extent toward the front of the body 10. When the pair of front drive wheels 20 are configured to protrude to the maximum extent toward the front of the body 10, the area of the support polygon of the mobile robot 1 may be increased.

Therefore, when the front motor 52 rotates, the first ends of the pair of upper arms 56 may move linearly along the front screw 53. For example, when the front motor 52 rotates, the front screw 53 may rotate. When the front screw 53 rotates, the front nut 54 screw-coupled to the front screw 53 may move linearly along the front screw 53. Because the first ends of the pair of upper arms 56 are rotatably connected to the front nut 54 by the middle bar 55, when the front screw 53 rotates, the first ends of the pair of upper arms 56 may move linearly along the front screw 53.

When the pair of upper arms 56 move linearly along the front screw 53, the pair of front drive wheels 20 may be swung at a certain angle with respect to the body 10 by the pair of upper arms 56 and the pair of lower arms 57. When the front motor 52 rotates in one direction, the pair of front drive wheels 20 may swing upward with respect to the body 10, that is, counter-clockwise, and rise. When the front motor 52 rotates in the opposite direction, the pair of front drive wheels 20 may swing downward with respect to the body 10, that is, clockwise, and descend.

The rear wheel switching device 60 may be configured to move the pair of rear drive wheels 30. The rear wheel switching device 60 may be configured to move the pair of rear drive wheels 30 back and forth with respect to the body 10.

In the four-wheel mode, the rear wheel switching device 60 may move the pair of rear drive wheels 30 toward the rear of the body 10 so that the pair of rear drive wheels 30 protrude from the rear end of the body 10. The pair of rear drive wheels 30 may be disposed to protrude to the maximum extent toward the rear of the body 10. When the pair of rear drive wheels 30 are configured to protrude as much as possible from the rear end of the body 10, the area of the support polygon of the mobile robot 1 may be increased.

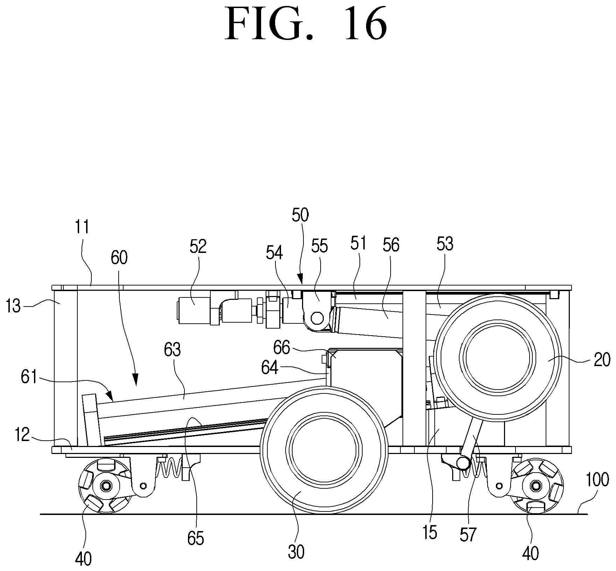

In the two-wheel mode, the rear wheel switching device 60 may move the pair of rear drive wheels 30 to the center of the body 10 to position the pair of rear drive wheels 30 at the center of the body 10, thereby lowering the body 10. Then, the four auxiliary wheels 40 disposed on the lower surface of the body 10 come into contact with the moving surface 100. At this time, the pair of rear drive wheels 30 may be positioned at the center of the four auxiliary wheels 40. For example, as illustrated in FIG. 16, two auxiliary wheels 40 may be positioned on the left side of the pair of rear drive wheels 30, and the other two auxiliary wheels 40 may be positioned on the right side of the pair of rear drive wheels 30.

The rear wheel switching device 60 may include a rear linear actuator 61. The rear linear actuator 61 may be configured to move the pair of rear drive wheels 30 back and forth with respect to the body 10. The pair of rear drive wheels 30 may be positioned at the rear of the body 10 or at the center of the body 10 by the rear linear actuator 61.

The rear linear actuator 61 may be disposed at the lower portion of the body 10. For example, the rear linear actuator 61 may be disposed on the upper surface of the lower support plate 12 of the body 10.

The body 10 may include an inclined block 15 disposed on the upper surface of the lower support plate 12. The rear linear actuator 61 may be disposed on an inclined surface 151 of the inclined block 15.

The inclined block 15 may be formed to have the inclined surface 151 that is inclined upwardly with respect to the lower support plate 12. The inclined block 15 may be disposed so that the high point of the inclined surface 151 is adjacent to the front end of the body 10 and the low point of the inclined surface 151 is adjacent to the rear end of the body 10. The angle of the inclined surface 151 may be defined so that when the pair of rear drive wheels 30 are positioned at the center of the body 10, the four auxiliary wheels 40 disposed on the lower surface of the body 10 come into contact with the moving surface 100.

Referring to FIGS. 5, 8, and 10, the rear linear actuator 61 may include a rear motor 62, a rear screw 63, and a rear nut 64.

The rear motor 62 may be disposed on the lower support plate 12. The rear motor 62 may be disposed on a first end of the inclined block 15. The rear motor 62 may be disposed at the high point of the inclined block 15. The rear motor 62 may be supported by a motor bracket 623 disposed on the first end of the inclined block 15.

The rear motor 62 may be configured to rotate the rear screw 63. The rear motor 62 may be configured to rotate the rear screw 63 in both directions. The rear motor 62 may include a motor shaft 621.

The rear screw 63 may be disposed to be rotated by the rear motor 62. The rear screw 63 may be disposed so that both ends of the rear screw 63 are supported on the inclined surface 151 of the inclined block 15 disposed on the lower support plate 12. The rear screw 63 may be supported by a pair of support blocks 631 disposed on the inclined surface 151 of the inclined block 15.

The first end of the rear screw 63 may be coupled to the motor shaft 621 of the rear motor 62 by a coupling 622. Therefore, when the motor shaft 621 rotates, the rear screw 63 may rotate integrally with the motor shaft 621.

The rear nut 64 may be screw-coupled to the rear screw 63. Therefore, when the rear screw 63 rotates, the rear nut 64 may move linearly along the rear screw 63. For example, the rear screw 63 and the rear nut 64 may be configured to convert the rotational motion of the rear motor 62 into the linear motion of the rear nut 64. The rear screw 63 and the rear nut 64 may be formed as a lead screw and a nut or a ball screw and a ball nut.

The linear motion of the rear nut 64 may be guided by an LM guide 65. The LM guide 65 may be disposed on the upper surface of the inclined block 15. The LM guide 65 may be disposed between the pair of support blocks 631.

The LM guide 65 may include an LM block 651. The LM block 651 may be disposed to slide relative to the LM guide 65. The rear nut 64 may be disposed on the upper surface of the LM block 651. Therefore, the rear nut 64 may slide linearly along the LM guide 65.

The rear wheel switching device 60 may include a support bar 66 configured to connect the pair of rear drive wheels 30 and the rear linear actuator 61. A first end of the support bar 66 may be connected to the rear linear actuator 61, and a second end thereof may be connected to the pair of rear drive wheels 30.

The support bar 66 may be connected to the rear nut 64. For example, the rear nut 64 may be disposed at the center of the support bar 66. Therefore, when the rear nut 64 moves linearly by the rear screw 63, the support bar 66 may move linearly along the rear screw 63 together with the rear nut 64.

The support bar 66 may include a left support bar 661 and a right support bar 662.

The first end of the left support bar 661 may be fixed to the rear nut 64, and the second end thereof may be connected to a support bracket 33 that supports the rear in-wheel motor 31 of the left rear drive wheel 30.

The first end of the right support bar 662 may be fixed to the rear nut 64, and the second end thereof may be connected to a support bracket 33 that supports the rear in-wheel motor 31 of the right rear drive wheel 30. The right support bar 662 may be disposed symmetrically with respect to the left support bar 661 based on the rear nut 64.

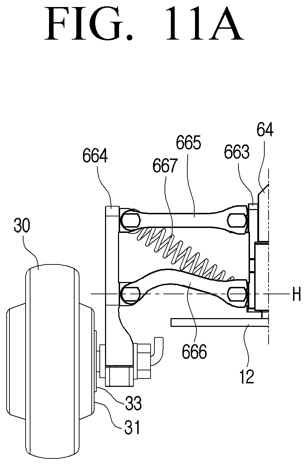

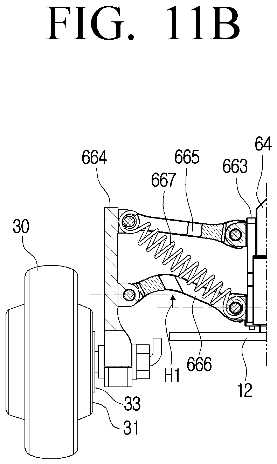

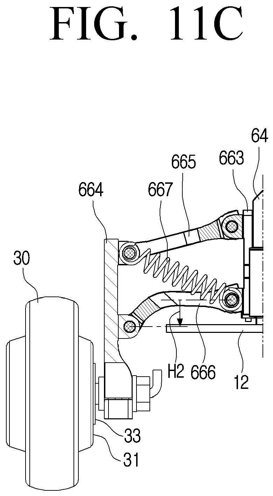

Because the left support bar 661 and the right support bar 662 are configured to have the same structure, the left support bar 661 will be described in detail below with reference to FIGS. 10, 11A, 11B, and 11C.

FIG. 11A is a partial view illustrating a left support bar 661 of a rear wheel switching device 60 of a mobile robot 1 according to one or more embodiments of the disclosure. FIG. 11B is a partial view illustrating a left support bar 661 of a rear wheel switching device 60 of a mobile robot 1 according to one or more embodiments of the disclosure when a rear drive wheel 30 is raised. FIG. 11C is a partial view illustrating a left support bar 661 of a rear wheel switching device 60 of a mobile robot 1 according to one or more embodiments of the disclosure when a rear drive wheel 30 is lowered.

Referring to FIGS. 10, 11A, 11B, and 11C, the left support bar 661 may include a fixed plate 663, a movable plate 664, an upper link 665, a lower link 666, and a coil spring 667.

The fixed plate 663 may be disposed on the rear linear actuator 61. For example, the fixed plate 663 may be fixed to the rear nut 64 of the rear linear actuator 61. The fixed plate 663 may be formed in a rectangular flat plate.

The movable plate 664 may be disposed at a certain distance from the fixed plate 663 and parallel to the fixed plate 663. The movable plate 664 may be formed in a rectangular flat plate. The rear drive wheel 30 may be disposed on the movable plate 664. The rear drive wheel 30 may be disposed on the lower portion of the movable plate 664. The movable plate 664 may be disposed on the support bracket 33 of the rear in-wheel motor 31.

The upper link 665 and the lower link 666 may be disposed between the fixed plate 663 and the movable plate 664.

A first end of the upper link 665 may be rotatably disposed on the fixed plate 663, and a second end thereof may be rotatably disposed on the movable plate 664. The upper link 665 may be formed in a straight bar shape.

The lower link 666 may be disposed below the upper link 665. The first end of the lower link 666 may be rotatably disposed on the fixed plate 663, and the second end thereof may be rotatably disposed on the movable plate 664. The lower link 666 may be formed in a curved bar shape that is convex upward. When the lower link 666 is formed in the curved bar shape, interference with the lower support plate 12 may be prevented.

Therefore, the rear drive wheel 30 may move vertically with respect to the rear linear actuator 61 by the upper link 665, the lower link 666, and the movable plate 664.

The coil spring 667 may be configured to apply a force downward to the rear drive wheel 30. When the coil spring 667 applies a force downward to the rear drive wheel 30, the rear drive wheel 30 may maintain contact with the moving surface 100. Therefore, when the moving surface 100 is uneven, the rear drive wheel 30 may move while maintaining contact with the moving surface 100.

The coil spring 667 may be arranged diagonally between the fixed plate 663 and the movable plate 664. The coil spring 667 may be arranged diagonally between the upper link 665 and the lower link 666. For example, a first end of the coil spring 667 may be connected to the second end of the upper link 665 disposed on the movable plate 664, and a second end of the coil spring 667 may be connected to the first end of the lower link 666 disposed on the fixed plate 663. In this case, a tension spring may be used as the coil spring 667.

As another example, the coil spring 667 may further include a shock absorber. The coil spring 667 and the shock absorber may be arranged in a straight line.

FIG. 11A illustrates a case where the rear drive wheel 30 moves on a flat surface. In this scenario, the first end and the second end of the lower link 666 may be located on a horizontal plane H. The first end and the second end of the upper link 665 may be located on a plane parallel to the horizontal plane H.

When the rear drive wheel 30 is located on a convex surface, the rear drive wheel 30 rises as shown in FIG. 11B.

As illustrated in FIG. 11B, when the rear drive wheel 30 rises, the second end of the lower link 666 may rise by a certain height H1 higher than the first end thereof. The second end of the upper link 665 may also rise by the certain height H1 higher than the first end thereof. FIG. 11B illustrates a state where the rear drive wheel 30 rises about 10 mm. In this case, because the tension coil spring 667 is disposed between the second end of the upper link 665 and the first end of the lower link 666, the rear drive wheel 30 may receive a downward force by the coil spring 667. Therefore, the rear drive wheel 30 may maintain contact with the convex surface.

When the rear drive wheel 30 is located on a concave surface, the rear drive wheel 30 may be descend as illustrated in FIG. 11C.

As illustrated in FIG. 11C, when the rear drive wheel 30 is lowered, the second end of the lower link 666 may be lowered by a certain height H2 lower than the first end thereof. The second end of the upper link 665 may be also lowered by the certain height H2 lower than the first end thereof. FIG. 11C shows a state where the rear drive wheel 30 is lowered by about 20 mm. In this case, because the tension coil spring 667 is disposed between the second end of the upper link 665 and the first end of the lower link 666, the rear drive wheel 30 may receive a downward force by the coil spring 667. Therefore, the rear drive wheel 30 may maintain contact with the concave surface.

In the above, the first end of the coil spring 667 is connected to second end of the upper link 665 disposed on the movable plate 664, and the second end of the coil spring 667 is connected to the first end of the lower link 666 disposed on the fixed plate 663. However, the arrangement of the coil spring 667 is not limited thereto.

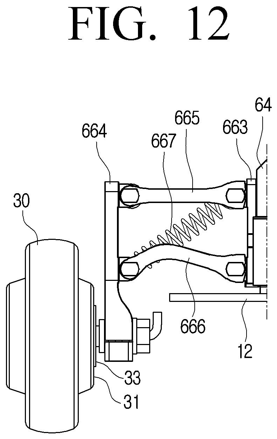

As another example, as illustrated in FIG. 12, the coil spring 667 may be arranged in the opposite direction.

FIG. 12 is a partial view illustrating a left support bar 661 of a rear wheel switching device 60 of a mobile robot 1 according to one or more embodiments of the disclosure.

Referring to FIG. 12, the coil spring 667 may be arranged diagonally between the fixed plate 663 and the movable plate 664. The coil spring 667 may be arranged diagonally between the upper link 665 and the lower link 666. For example, the first end of the coil spring 667 may be connected to the second end of the lower link 666 disposed on the movable plate 664, and the second end of the coil spring 667 may be connected to the first end of the upper link 665 disposed on the fixed plate 663. In this case, a compression spring may be used as the coil spring 667.

Then, the coil spring 667 may apply a force in a downward direction to the rear drive wheel 30. When the coil spring 667 applies a force in a downward direction to the rear drive wheel 30, the rear drive wheel 30 may maintain contact with the moving surface 100.

The left support bar 661 and the right support bar 662 may be configured as a double wishbone suspension.

When the rear motor 62 rotates, the support bar 66 may move linearly along the rear screw 63. For example, when the rear motor 62 rotates, the rear screw 63 may rotate. When the rear screw 63 rotates, the rear nut 64 screw-coupled to the rear screw 63 may move linearly along the rear screw 63. Because the support bar 66 is connected to the rear nut 64, when the rear screw 63 rotates, the support bar 66 may move linearly along the rear screw 63.

When the support bar 66 moves linearly along the rear screw 63 disposed on the inclined block 15, the body 10 may be raised or lowered with respect to the moving surface 100 by the inclined block 15. When the rear motor 62 rotates in one direction, the rear drive wheels 30 may move to the center of the body 10 so that the body 10 may be lowered. When the rear motor 62 rotates in the opposite direction, the rear drive wheels 30 may move rearward so that the body 10 may be raised.

In the four-wheel mode illustrated in FIGS. 4 to 8, the pair of front drive wheels 20 and the pair of rear drive wheels 30 come into contact with the moving surface 100. At this time, the pair of front drive wheels 20 may protrude to the maximum from the front end of the body 10, and the pair of rear drive wheels 30 may be protrude to the maximum from the rear end of the body 10. Accordingly, the area of the support polygon of the mobile robot 1 may be increased, so that the mobile robot 1 may stably move on an uneven moving surface 100, such as outdoors.

In the four-wheel mode, the four auxiliary wheels 40 may not come into contact with the moving surface 100. For example, the four auxiliary wheels 40 may be spaced apart from the moving surface 100 by a certain distance.

The four auxiliary wheels 40 may be disposed on the lower surface of the body 10. For example, the four auxiliary wheels 40 may be disposed on the lower surface of the lower support plate 12. The two auxiliary wheels 40 may be disposed adjacent to the front end of the lower support plate 12. The other two auxiliary wheels 40 may be disposed adjacent to the rear end of the lower support plate 12.

The auxiliary wheels 40 may be configured to enable omnidirectional movement so that the mobile robot 1 may rotate in place in the two-wheel mode. In other words, a wheel capable of omnidirectional rotation may be used as the auxiliary wheels 40. For example, a caster, an omni wheel, a mecanum wheel, etc. may be used as the auxiliary wheels 40.

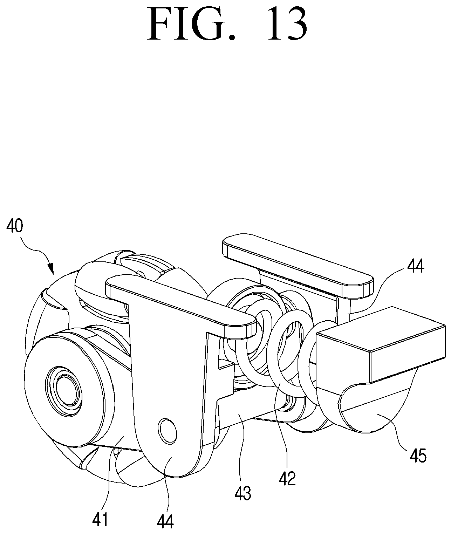

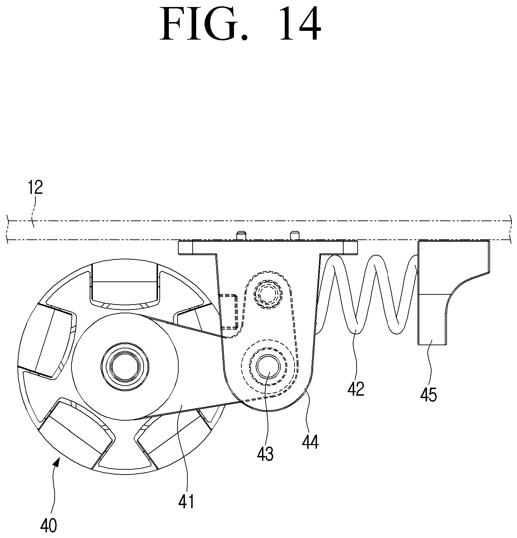

In the case of the embodiment of the disclosure, an omni wheel may be used as the auxiliary wheel 40 as illustrated in FIGS. 13 and 14.

FIG. 13 is a perspective view illustrating an auxiliary wheel 40 of a mobile robot 1 according to one or more embodiments of the disclosure. FIG. 14 is a side view illustrating the auxiliary wheel 40 of FIG. 13 according to one or more embodiments of the disclosure.

Referring to FIGS. 13 and 14, the auxiliary wheel 40 may include an auxiliary arm 41 and an elastic member 42.

The auxiliary arm 41 may be formed in an approximately L shape. The auxiliary wheel 40 may be rotatably disposed at a first end of the auxiliary arm 41. The elastic member 42 may be disposed at the second end of the auxiliary arm 41.

For example, the auxiliary arm 41 may include a pair of auxiliary arms 41 arranged in parallel. The auxiliary wheel 40 may be rotatably disposed between first ends of the pair of auxiliary arms 41. The pair of auxiliary arms 41 may be elastically supported by the elastic member 42 disposed at the second ends thereof.

The auxiliary arm 41 may be rotatably disposed on the lower surface of the lower support plate 12. The auxiliary arm 41 may be rotatably supported by an auxiliary shaft 43. The auxiliary shaft 43 may be supported at both ends by a pair of auxiliary brackets 44. The pair of auxiliary brackets 44 may be disposed on the lower surface of the lower support plate 12. Therefore, the auxiliary arm 41 may be rotatably disposed on the lower support plate 12 by the auxiliary shaft 43 and the pair of auxiliary brackets 44.

The elastic member 42 may be disposed between the second end of the auxiliary arm 41 and a fixed bracket 45. For example, a first end of the elastic member 42 may be supported by the second end of the auxiliary arm 41, and a second end of the elastic member 42 may be supported by the fixed bracket 45. Accordingly, the auxiliary wheel 40 may be elastically supported with respect to the lower support plate 12 by the elastic member 42. A coil spring may be used as the elastic member 42.

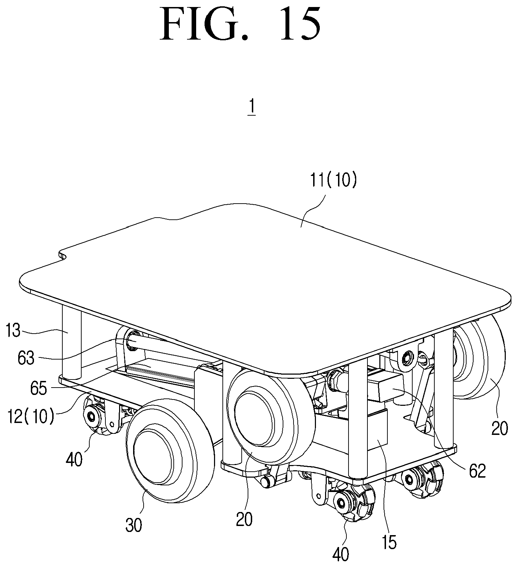

The mobile robot 1 according to one or more embodiments of the disclosure may be converted from the four-wheel mode to the two-wheel mode by the wheel switching devices 50 and 60. The mobile robot 1 converted to the two-wheel mode is illustrated in FIGS. 15 to 17.

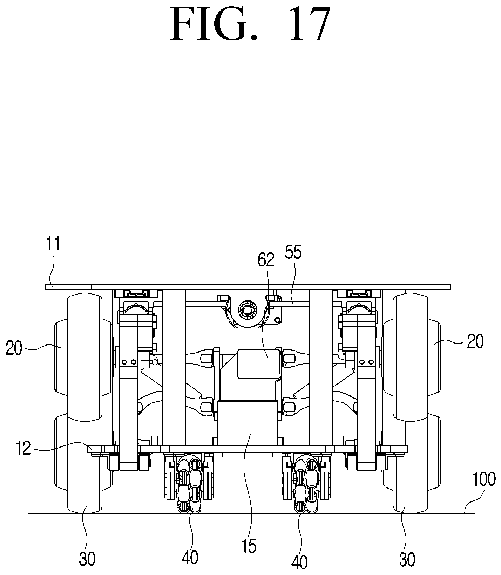

FIG. 15 is a perspective view illustrating a mobile robot 1 according to one or more embodiments of the disclosure, which has been switched to a two-wheel mode. FIG. 16 is a side view illustrating the mobile robot 1 of FIG. 15 according to one or more embodiments of the disclosure. FIG. 17 is a front view illustrating the mobile robot 1 of FIG. 15 according to one or more embodiments of the disclosure.

As illustrated in FIGS. 15 to 17, when the mobile robot 1 according to one or more embodiments of the disclosure is in the two-wheel mode, the pair of front drive wheels 20 may be spaced apart from the moving surface 100, and the pair of rear drive wheels 30 and the four auxiliary wheels 40 may be in contact with the moving surface 100. At this time, the pair of front drive wheels 20 may be raised and positioned inside the body 10, and the pair of rear drive wheels 30 may be positioned at the center of the body 10.

For example, when the front motor 52 rotates, the front screw 53 may rotate. When the front screw 53 rotates, the front nut 54 may move linearly along the front screw 53 toward the center of the body 10. Because the middle bar 55 to which the pair of upper arms 56 are connected is fixed to the front nut 54, the pair of upper arms 56 may move linearly along the front screw 53 toward the center of the body 10.

When the pair of upper arms 56 move linearly toward the center of the body 10 along the front screw 53, the front drive wheels 20 may be rotated in a counter-clockwise direction by a certain angle with respect to the body 10 by the pair of upper arms 56 and the pair of lower arms 57. Then, as illustrated in FIG. 16, the pair of front drive wheels 20 are spaced apart from the moving surface 100 and positioned between the upper support plate 11 and the lower support plate 12 of the body 10, and do not protrude from the front surface of the body 10.

In addition, when the rear motor 62 rotates, the rear screw 63 may rotate so that the rear nut 64 moves along the rear screw 63 to the center of the body 10. At this time, the movement of the rear nut 64 may be guided by the LM guide 65 and the LM block 651. Because the support bar 66 supporting the pair of rear drive wheels 30 is fixed to the rear nut 64, the pair of rear drive wheels 30 may move to the center of the body 10.

Because the LM guide 65 is disposed on the inclined surface 151 of the inclined block 15 disposed on the lower support plate 12 of the body 10, the rear nut 64 may move along the inclined surface 151, that is, in a diagonal direction, toward the center of the body 10. Because the rear nut 64 is provided with the support bar 66 that supports the pair of rear drive wheels 30, the pair of rear drive wheels 30 may move along the inclined surface 151, that is, in the diagonal direction.

When the pair of rear drive wheels 30 move along the inclined surface 151 of the inclined block 15 of the body 10 to the center of the body 10, the pair of rear drive wheels 30 may remain in contact with the moving surface 100 and the body 10 may move downward. When the pair of rear drive wheels 30 are positioned at the center of the body 10, the four auxiliary wheels 40 disposed on the lower surface of the body 10 may descend and come into contact with the moving surface 100. For example, in the two-wheel mode, the pair of rear drive wheels 30 and the four auxiliary wheels 40 may come into contact with the moving surface 100. At this time, two auxiliary wheels 40 may be positioned in front of the pair of rear drive wheels 30, and the other two auxiliary wheels 40 may be positioned in the rear of the pair of rear drive wheels 30.

When the mobile robot 1 is in the two-wheel mode, the area of the support polygon of the mobile robot 1 may be minimized, so that the mobile robot 1 may efficiently move in a narrow or complicated place such as indoors. In particular, in the two-wheel mode, the mobile robot 1 may rotate in place by the pair of rear drive wheels 30.

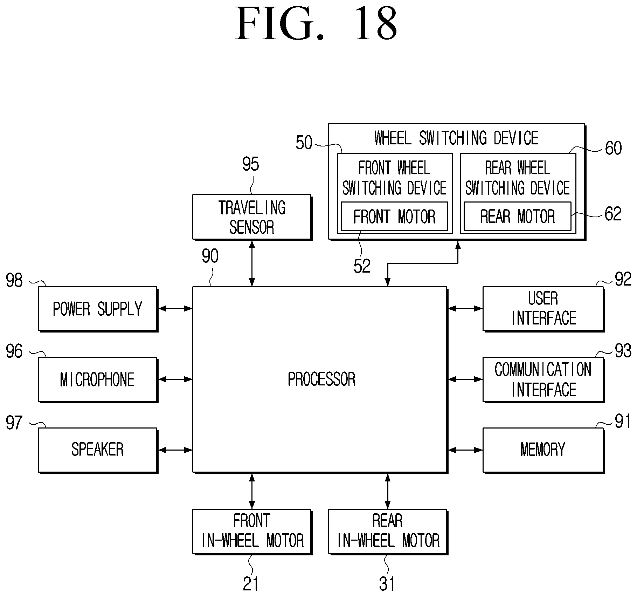

FIG. 18 is a block diagram illustrating a mobile robot 1 according to one or more embodiments of the disclosure.

Referring to FIG. 18, the mobile robot 1 according to one or more embodiments of the disclosure may include a processor 90.

The processor 90 may be configured to control the mobile robot 1 in whole or in part. For example, the processor 90 may be configured to control the wheel switching devices 50 and 60 of the mobile robot 1. As an example, the processor 90 may control the wheel switching devices 50 and 60 to switch the mobile robot 1 to the four-wheel mode or the two-wheel mode. For example, when the mobile robot 1 is in the four-wheel mode, the processor 90 may control the wheel switching devices 50 and 60 to switch the mobile robot 1 to the two-wheel mode. When the mobile robot 1 is in the two-wheel mode, the processor 90 may control the wheel switching devices 50 and 60 to switch the mobile robot 1 to the four-wheel mode.

The processor 90 may be configured in various ways as long as it can control the mobile robot 1. For example, the processor 90 may be implemented as a microprocessor, a graphics-processing unit (GPU), an artificial intelligence (AI) processor, a neural processing unit (NPU), or a time controller (TCON). However, the processor 90 is not limited thereto, and may include one or more of a central processing unit (CPU), a micro controller unit (MCU), a micro processing unit (MPU), a controller, an application processor (AP), a communication processor (CP), and an advanced reduced instruction set computing (RISC) machine (ARM) processor or may be defined as a corresponding term. In addition, the processor 90 may be implemented as a system on chip (SoC) or a large scale integration (LSI) in which a processing algorithm is built therein, or may be implemented as an application specific integrated circuit (ASIC) type or a field programmable gate array (FPGA) type.

The mobile robot 1 may include a memory 91. The memory 91 may store map data. The map data may include information about the outdoors and information about the indoors. The map data may include information about the moving surface 100. For example, the map data may include a reference height of a step on which the mobile robot 1 travels in the four-wheel mode.

In addition, the memory 91 may store at least one instruction regarding the mobile robot 1. The memory 91 may store an operating system (O/S) for driving the mobile robot 1. In addition, the memory 91 may store various software programs or applications for operating the mobile robot 1 according to one or more embodiments of the disclosure.

The memory 91 may include a semiconductor memory such as a flash memory and the like or a magnetic storage medium such as a hard disk and the like.

On the other hand, in the disclosure, the term memory 91 may be used to refer to a memory, a read-only memory (ROM) within the processor, a random-access memory (RAM), or a memory card (e.g., a micro SD card, a memory stick) mounted on the mobile robot 1.

The processor 90 may include one or multiple processors. For example, the processor 90 may perform an operation of the mobile robot 1 according to one or more embodiments of the disclosure by executing at least one instruction stored in the memory 91.

The mobile robot 1 may include a user interface 92. The mobile robot 1 according to the embodiment of the disclosure may use a touch display as the user interface 92. The mobile robot 1 may output the status of the mobile robot 1 through the touch display. In addition, the mobile robot 1 may receive user instructions through the touch display. For example, the mobile robot 1 may receive a four-wheel mode command or a two-wheel mode command input by the user through the touch display.

However, the user interface 92 used in the mobile robot 1 of the disclosure is not limited thereto. The user interface 92 may include various types of input devices. For example, the user interface 92 may include physical buttons. In this case, the physical buttons may include a function key, a direction key, and a dial button. The physical button may be implemented with the plurality of keys.

The mobile robot 1 may include a communication interface 93. The mobile robot 1 may communicate with an external device, such as a server, a mobile device, and the like, through the communication interface 93. The mobile robot 1 may receive an operation mode command from an external device through the communication interface 93.

The processor 90 may control the mobile robot 1 according to an instruction received through the communication interface 93.

The communication interface 93 may be implemented as wireless communication. For example, the communication interface 93 may be configured to perform communication using at least one of the following communication methods: Wi-Fi, Wi-Fi Direct, Bluetooth, Zigbee, third generation (3G), third generation partnership project (3GPP), long term evolution (LTE), and fifth generation (5G).

The mobile robot 1 may include a pair of front in-wheel motors 21 and a pair of rear in-wheel motors 31. The front in-wheel motor 21 may be disposed in the front drive wheel 20 to drive the front drive wheel 20. The rear in-wheel motor 31 may be disposed in the rear drive wheel 30 to drive the rear drive wheel 30. The processor 90 may control the pair of front in-wheel motors 21 and the pair of rear in-wheel motors 31 to move the mobile robot 1 in a desired direction.

The mobile robot 1 may include a traveling sensor 95. The processor 90 may use a signal input from the traveling sensor 95 to move the mobile robot 1 to a destination. The processor 90 may use the traveling sensor 95 to avoid obstacles on the moving path. The processor 90 may use the traveling sensor 95 to recognize the state of the moving path. For example, the processor 90 may use the traveling sensor 95 to recognize whether the mobile robot 1 is indoors or outdoors.

The traveling sensor 95 may include an ultrasonic sensor, a three dimensional camera (3D camera), a time of flight sensor (TOF sensor), a light detection and ranging sensor (LiDAR sensor), etc. The processor 90 may recognize the position of the mobile robot 1 using a signal input from the traveling sensor 95. The processor 90 may recognize an obstacle on the moving path using a signal input from the traveling sensor 95.

The mobile robot 1 may include a microphone 96. The processor 90 may control the mobile robot 1 using a signal input from the microphone 96. The microphone 96 may be configured to convert a user's voice into an electric signal. Therefore, the user may control the mobile robot 1 by voice.

The mobile robot 1 may include a speaker 97. The processor 90 may output an alarm or information about the status of the mobile robot 1 as a sound through the speaker 97.

The mobile robot 1 may include a power supply 98. The power supply 98 may be configured to supply power to all internal components of the mobile robot 1. For example, a rechargeable battery may be used as the power supply 98.

The processor 90 may recognize the status of the power supply 98 using a signal input from the power supply 98. The processor 90 may output the status of the power supply 98 through the speaker 97. When the power of the power supply 98 is insufficient, the processor 90 may control the pair of front in-wheel motors 21 and the pair of rear in-wheel motors 31 to move the mobile robot 1 to a charging station.

When the processor 90 recognizes that the mobile robot 1 is located outdoors using the traveling sensor 95, the processor 90 may cause the mobile robot 1 to move in the four-wheel mode. When the current mode of the mobile robot 1 is the two-wheel mode, the processor 90 may control the front motor 52 of the front wheel switching device 50 and the rear motor 62 of the rear wheel switching device 60 to switch the two-wheel mode to the four-wheel mode. After that, the processor 90 may control the pair of front in-wheel motors 21 and the pair of rear in-wheel motors 31 to travel the mobile robot 1.

When the processor 90 recognizes that a space where the mobile robot 1 is located is narrow or complex based on the signal from the traveling sensor 95, the processor 90 may cause the mobile robot 1 to travel in the two-wheel mode. When the current mode of the mobile robot 1 is the four-wheel mode, the processor 90 may control the front motor 52 of the front wheel switching device 50 and the rear motor 62 of the rear wheel switching device 60 to switch the four-wheel mode to the two-wheel mode. After that, the processor 90 may control the pair of rear in-wheel motors 31 to travel the mobile robot 1.

When the processor 90 recognizes that the mobile robot 1 has passed through the narrow or complex space using the traveling sensor 95, the processor 90 may cause the mobile robot 1 to travel in the four-wheel mode. For example, the processor 90 may control the wheel switching devices 50 and 60 to switch the two-wheel mode to the four-wheel mode, and may control the pair of front in-wheel motors 21 and the pair of rear in-wheel motors 31 to travel the mobile robot 1.

When the processor 90 recognizes that the mobile robot 1 is located indoors using the traveling sensor 95, the processor 90 may cause the mobile robot 1 to travel in the two-wheel mode. When the current mode of the mobile robot 1 is the four-wheel mode, the processor 90 may control the wheel switching devices 50 and 60 to switch the four-wheel mode to the two-wheel mode, and may control the pair of rear in-wheel motors 31 to travel the mobile robot 1.

During traveling, when the processor 90 recognizes a high step on the moving surface 100 from a signal of the traveling sensor 95, the processor 90 may control the wheel switching devices 50 and 60 to switch the two-wheel mode to the four-wheel mode. After the mobile robot 1 passes the high step in the four-wheel mode, the processor 90 may control the wheel switching devices 50 and 60 to switch the four-wheel mode to the two-wheel mode to travel the mobile robot 1.

When the processor 90 recognizes that excessive torque has occurred in the front in-wheel motor 21 and/or the rear in-wheel motor 31, the processor 90 may control the front motor 52 of the front wheel switching device 50 and the rear motor 62 of the rear wheel switching device 60 to switch the two-wheel mode to the four-wheel mode. When the mobile robot 1 passes over an obstacle such as a bump, a carpet, etc., excessive torque may occur in the front in-wheel motor 21 and/or the rear in-wheel motor 31. After the mobile robot 1 passes over the obstacle in the four-wheel mode, the processor 90 may control the wheel switching devices 50 and 60 to switch the four-wheel mode to the two-wheel mode to travel the mobile robot 1.

The mobile robot 1 according to one or more embodiments of the disclosure having the structure as described above may travel in the four-wheel mode capable of exerting a strong driving force outdoors, and may travel in the two-wheel mode capable of exerting a fast steering performance indoors. Therefore, the mobile robot 1 according to one or more embodiments of the disclosure may achieve high traveling performance in various indoor and outdoor environments.

In addition, the mobile robot 1 according to one or more embodiments of the disclosure may travel in the four-wheel mode when encountering an obstacle while traveling indoors, thereby improving obstacle overcoming performance.

In addition, the mobile robot 1 according to one or more embodiments of the disclosure may rotate in place in the two-wheel mode while traveling indoors, thereby effectively passing through narrow or complex spaces.

In the foregoing, the disclosure has been shown and described with reference to example embodiments. However, it is understood by those skilled in the art that various changes may be made in form and detail without departing from the scope of the disclosure as defined by the appended claims and equivalents thereof.

## Claims

1. A mobile robot comprising:
a body;
a pair of front drive wheels at a front portion of the body;
a pair of rear drive wheels at a rear portion of the body;
four auxiliary wheels on a lower surface of the body; a front wheel switching device comprising a front linear actuator disposed at an upper portion of the body; and
a rear wheel switching device comprising a rear linear actuator disposed at a lower portion of the body,
wherein the front wheel switching device and the rear wheel switching device are configured to switch the pair of front drive wheels and the pair of rear drive wheels between a four-wheel mode and a two-wheel mode,
wherein, in the four-wheel mode, the pair of front drive wheels and the pair of rear drive wheels are in contact with a moving surface, and the four auxiliary wheels are spaced apart from the moving surface, and
wherein, in the two-wheel mode, the pair of front drive wheels are spaced apart from the moving surface, the pair of rear drive wheels are in a center of the body, and the pair of rear
drive wheels and the four auxiliary wheels are in contact with the moving surface.

2. The mobile robot of claim 1,
wherein the front wheel switching device is configured to move the pair of front drive wheels up and down with respect to the body; and
wherein the rear wheel switching device is configured to move the pair of rear drive wheels forward and backward with respect to the body.

3. The mobile robot of claim 2, wherein
the front linear actuator is configured to move the pair of front drive wheels up and down.

4. The mobile robot of claim 3, wherein
the front wheel switching device further comprises:
an upper arm comprising a first end connected to the front linear actuator and a second end connected to the pair of front drive wheels; and
a lower arm comprising a first end connected to the lower portion of the body and a second end connected to the pair of front drive wheels.

5. The mobile robot of claim 4, wherein
the front linear actuator comprises:
a front motor;
a front screw configured to be rotated by the front motor; and
a front nut that is screw-coupled to the front screw and to which the first end of the upper arm is connected, and
wherein rotation of the front motor causes the first end of the upper arm to move linearly along the front screw.

6. The mobile robot of claim 4, wherein
the upper arm comprises a suspension.

7. The mobile robot of claim 6, wherein
the suspension comprises a coil spring and a shock absorber.

8. The mobile robot of claim 2, wherein
the rear linear actuator is configured to move the pair of rear drive wheels forward and backward with respect to the body.

9. The mobile robot of claim 8, wherein
the body comprises:
an upper support plate;
a lower support plate below the upper support plate; and
an inclined block on an upper surface of the lower support plate, the inclined block including an inclined surface, and
wherein the rear linear actuator is on the inclined surface of the inclined block.

10. The mobile robot of claim 8, wherein
the rear wheel switching device further comprises a support bar comprising a first end connected to the rear linear actuator and a second end connected to the pair of rear drive wheels.

11. The mobile robot of claim 10, wherein
the rear linear actuator comprises:
a rear motor;
a rear screw configured to be rotated by the rear motor; and
a rear nut which is screw-coupled to the rear screw and is connected to the support bar, and
wherein rotation of the rear motor causes the support bar to move linearly along the rear screw.

12. The mobile robot of claim 8, wherein
the rear wheel switching device further comprises:
a fixed plate on the rear linear actuator;
a movable plate parallel to the fixed plate and spaced apart from the fixed plate by a certain distance, wherein the pair of rear drive wheels are on the movable plate;
an upper link comprising a first end rotatably attached to the fixed plate and a second end rotatably attached to the movable plate;
a lower link below the upper link, the lower link comprising a first end rotatably attached to the fixed plate and a second end rotatably attached to the movable plate; and
a coil spring between the upper link and the lower link.

13. The mobile robot of claim 8, wherein
the rear wheel switching device comprises:
a fixed plate on the rear linear actuator;
a movable plate parallel to the fixed plate and spaced apart from the fixed plate by a certain distance, wherein one of the pair of rear drive wheels is on the movable plate; and
a suspension between the movable plate and the fixed plate.

14. The mobile robot of claim 1, wherein
each of the pair of front drive wheels and each of the pair of rear drive wheels comprises an in-wheel motor.

15. The mobile robot of claim 1, wherein
each of the four auxiliary wheels comprises an omni wheel.
